(19) **Europäisches Patentamt / European Patent Office / Office européen des brevets**

(11) **EP 2 327 190 B1**

(12) # FASCICULE DE BREVET EUROPEEN

(45) Date de publication et mention de la délivrance du brevet:
**15.02.2012 Bulletin 2012/07**

(21) Numéro de dépôt: **09812715.2**

(22) Date de dépôt: **14.09.2009**

(51) Int Cl.:
***H04L 27/26*** *(2006.01)*

(86) Numéro de dépôt international:
**PCT/EP2009/061873**

(87) Numéro de publication internationale:
**WO 2010/029172 (18.03.2010 Gazette 2010/11)**

(54) **Methode d'estimation aveugle de parametres de modulation OFDM selon un critere de maximum de vraisemblance**

Verfahren zur Blindschätzung von OFDM-Modulationsparametern nach einem Kriterium maximaler Wahrscheinlichkeit

Method for the blind estimation of OFDM modulation parameters according to a maximum likelihood criterion

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **15.09.2008 FR 0856195**

(43) Date de publication de la demande:
**01.06.2011 Bulletin 2011/22**

(73) Titulaire: **Commissariat à l'Énergie Atomique et aux Énergies Alternatives 75015 Paris (FR)**

(72) Inventeurs:
• **BOUZEGZI, Abdelaziz F-69003 LYON, (FR)**
• **JALLON, Pierre F-38100 Grenoble (FR)**
• **CIBLAT, Philippe F-75020 Paris (FR)**

(74) Mandataire: **Ilgart, Jean-Christophe et al BREVALEX 95 rue d'Amsterdam 75378 Paris Cedex 8 (FR)**

(56) Documents cités:
• **JAUME RIBA ET AL: "Conditional Maximum Likelihood Timing Recovery: Estimators and Bounds" IEEE TRANSACTIONS ON SIGNAL PROCESSING, IEEE SERVICE CENTER, NEW YORK, NY, US, vol. 49, no. 4, 1 avril 2001 (2001-04-01), XP011059287 ISSN: 1053-587X**

• **REY F ET AL: "Joint synchronization and symbol detection in asynchronous DS-CDMA systems" STATISTICAL SIGNAL AND ARRAY PROCESSING, 2000. PROCEEDINGS OF THE TENT H IEEE WORKSHOP ON AUGUST 14-16, 2000, PISCATAWAY, NJ, USA,IEEE, 14 août 2000 (2000-08-14), pages 687-691, XP010512254 ISBN: 978-0-7803-5988-8**

• **GEORGE D PANTOS: "A Numerical Technique for Blind Estimation of Carrier Frequency Offset in OFDM Systems" IEEE TRANSACTIONS ON BROADCASTING, IEEE SERVICE CENTER, PISCATAWAY, NJ, US, vol. 52, no. 4, 1 décembre 2006 (2006-12-01), pages 566-569, XP011150599 ISSN: 0018-9316**

• **YUCEK T ET AL: "A novel sub-optimum maximum-likelihood modulation classification algorithm for adaptive OFDMsystems" WIRELESS COMMUNICATIONS AND NETWORKING CONFERENCE, 2004. WCNC. 2004 IE EE ATLANTA, GA, USA 21-25 MARCH 2004, PISCATAWAY, NJ, USA,IEEE, vol. 2, 21 mars 2004 (2004-03-21), pages 739-744, XP010708570 ISBN: 978-0-7803-8344-9**

• **GREGORI VAZQUEZ, JAVIER VILLARES, JAUME RIBA: "Optimal Quadratic NDA Synchronization" 7TH INTERNATIONAL ESA CONFERENCE, [Online] 1 octobre 2001 (2001-10-01), pages 1-10, XP002534967 Extrait de l'Internet: URL:http://web.archive.org/web/20051029093 428/http://gps-tsc.upc.es/comm/main/public ations/papers_comm/p2001/gregori_DSP2001.p df> [extrait le 2009-06-26]**

- **ABDELAZIZ BOUZEGZI ET AL: "A fourth-order algorithm for blind characterization of OFDM signals" SIGNAL PROCESSING ADVANCES IN WIRELESS COMMUNICATIONS, 2008. SPAWC 2008. IEEE 9TH WORKSHOP ON, IEEE, PISCATAWAY, NJ, USA, 6 juillet 2008 (2008-07-06), pages 411-415, XP031345973 ISBN: 978-1-4244-2045-2**

- **AKMOUCHE W ET AL: "OFDM parameters estimation a time approach" SIGNALS, SYSTEMS AND COMPUTERS, 2000. CONFERENCE RECORD OF THE THIRTY- FOURTH ASILOMAR CONFERENCE ON OCT. 29 - NOV. 1, 2000, PISCATAWAY, NJ, USA,IEEE, vol. 1, 29 octobre 2000 (2000-10-29), pages 142-146, XP010535349 ISBN: 978-0-7803-6514-8**

**Description**

## DOMAINE TECHNIQUE

La présente invention concerne une méthode d'estimation aveugle de paramètres de modulation OFDM (*Orthogonal Frequency Division Multiplex*).

## ÉTAT DE LA TECHNIQUE ANTÉRIEURE

La modulation OFDM est bien connue de l'état de la technique et est employée dans de nombreux systèmes de télécommunication tels que DVB-T, ADSL, Wi-Fi (IEEE 802 a/g), WiMax (IEEE 802.16). Elle présente l'avantage d'une bonne efficacité spectrale et d'une bonne protection contre les évanouissements sélectifs en fréquence.

On rappelle que dans un système OFDM, les symboles d'information à transmettre sont groupés par blocs de $N$ symboles, où $N$ est généralement une puissance de 2, les symboles OFDM étant obtenus en effectuant une IFFT (*Inverse Fast Fourier Transform*) sur lesdits blocs de symboles d'information. Généralement, un préfixe cyclique est rajouté au début de chaque symbole OFDM pour absorber l'interférence inter-symbole ou ISI et faciliter l'égalisation à la réception. Le signal OFDM constitué par ces symboles OFDM peut être éventuellement ensuite translaté en fréquence.

De manière générale, le signal émis par un système OFDM peut être représenté en bande de base par :

$$s_a(t) = \frac{\sqrt{E}}{N} \sum_k g\left(t - k(N+D)T_c\right).\sum_{n=0}^{N-1} a_{k,n} e^{-2i\pi\frac{n}{NT_c}\left(t-DT_c-k(N+D)T_c\right)} \qquad (1)$$

où $E$ est la puissance du signal, $N$ est le nombre de porteuses du multiplex OFDM, $a_{k,n}$ sont les symboles d'information relatifs au bloc $k$, appartenant à un alphabet de modulation $M$-aire, typiquement BPSK, QPSK ou QAM, $1/T_c$ est le débit des symboles d'information où $T_c$ est le temps « bribe » ou « chip », $D$ est la taille du préfixe cyclique exprimée en nombre de bribes , $g(t)$ est une impulsion de mise en forme des symboles OFDM ayant un support temporel $[0,(N+D)T_c]$ destiné à apodiser le spectre du signal.

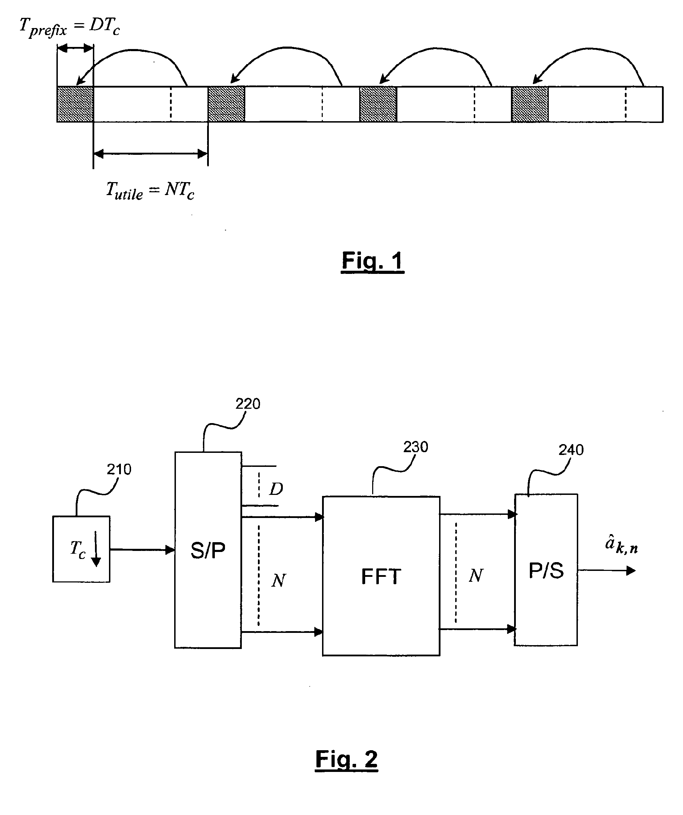

On a représenté de manière schématique un signal OFDM en Fig. 1. Il est constitué d'une séquence de symboles OFDM, chaque symbole présentant une durée totale $(N+D)T_c$ dont une durée utile $NT_c$ et un intervalle de garde de durée $T_{prefix} = DT_c$, dans lequel se trouve le préfixe cyclique. On rappelle que, de manière classique, le préfixe cyclique est une copie de la fin du symbole OFDM à l'intérieur de l'intervalle de garde. Dans certains systèmes OFDM, les préfixes cycliques sont simplement omis, autrement dit les parties utiles des symboles sont séparées par des intervalles de garde « vides ». Cette technique de transmission permet aussi d'éliminer l'interférence intersymbole mais ne rend pas aisée l'égalisation du signal.

Après propagation dans le canal de transmission, le signal OFDM reçu par le récepteur peut s'exprimer par :

$$y_a(t) = h \otimes s_a(t) + b(t) \qquad (2)$$

où $h \otimes s_a$ est la convolution entre le signal OFDM émis, $s_a(t)$ est la réponse impulsionnelle du canal de transmission $h(t)$, et $b(t)$ est une fonction aléatoire décrivant le bruit. On supposera que la longueur de la réponse impulsionnelle est inférieure à la durée de l'intervalle de garde, de sorte que l'on pourra faire abstraction de l'interférence intersymbole (ISI).

La Fig. 2 représente de manière schématique la structure d'un récepteur OFDM.

Après éventuelle démodulation en bande de base, le signal reçu est échantillonné en 210 à la fréquence chip, puis les échantillons sont soumis à une conversion série/parallèle en 220 pour former des blocs de $N + D$ échantillons. Les $D$ premiers échantillons correspondant à l'intervalle de garde sont rejetés et le bloc des $N$ échantillons restants correspondant à la partie utile du symbole OFDM est soumis à une FFT en 230. Les symboles démodulés obtenus sont ensuite soumis à une conversion série en 240.

En définitive, en supposant que le récepteur est bien synchronisé en temps et en fréquence, les symboles démodulés peuvent s'exprimer par :

$$\hat{a}_{k,n} = h_n a_{k,n} + b_{k,n} \qquad\qquad (3)$$

où $h_n$ est un coefficient complexe qui dépend de la réponse impulsionnelle du canal de transmission, et $b_{k,n}$ est une variable aléatoire représentant un échantillon de bruit.

Le bon fonctionnement de ce récepteur nécessite une synchronisation précise en temps et en fréquence. En effet, on comprend qu'une mauvaise synchronisation en temps entraînera un glissement temporel progressif de la fenêtre de troncation et une mauvaise synchronisation en fréquence, une rotation en phase des échantillons, pouvant être représentée par un facteur multiplicatif $e^{2i\pi\Delta fnTc}$ où $\Delta f$ est l'offset de fréquence entre la fréquence de démodulation du récepteur et la fréquence porteuse du multiplex OFDM.

La synchronisation temporelle et fréquentielle du récepteur est généralement réalisée grâce à l'acquisition d'une séquence d'apprentissage.

Le fonctionnement de ce détecteur suppose bien entendu que l'on connaisse les paramètres du signal OFDM transmis (autrement dit les paramètres des symboles OFDM). Par paramètres du signal OFDM on entend ici le nombre $N$ de sous-porteuses, la durée utile $NT_c$ d'un symbole ou de manière équivalente l'espacement fréquentiel $1/NT_c$ entre sous-porteuses, la durée de l'intervalle de garde $DT_c$ et/ou la période de répétition $(N+D)T_c$ de ces symboles.

Bien souvent, le récepteur ne connaît pas *a priori* les paramètres du signal OFDM et l'on doit procéder à leur estimation à l'aveugle, préalablement à toute démodulation.

Plusieurs méthodes ont été proposées à cet effet. Elles exploitent la présence du préfixe cyclique dans le signal OFDM et les propriétés de cyclostationnarité qui en découlent. Les estimateurs des paramètres sont basés sur la fonction d'autocorrélation du signal OFDM. On trouvera un exemple d'une telle méthode d'estimation dans l'article de P. Liu et al. intitulé « A blind time-parameters estimation scheme for OFDM in multi-path channel », publié dans Proc. 2005 Int'1 Conference on Information, Communications and Signal Processing, vol. 1, pp. 242-247, 23-26 Sept. 2005.

Ces méthodes d'estimation présentent cependant l'inconvénient de nécessiter d'acquérir un nombre élevé de symboles OFDM pour effectuer le calcul de la fonction d'autocorrélation. En outre, ces méthodes ne fonctionnent pas dans le cas, évoqué plus haut, où le signal OFDM est dépourvu de préfixes cycliques. Elles ne fonctionnent pas bien voire pas du tout lorsque le rapport entre la durée du préfixe et celle du symbole OFDM, $D/(D + N)$, est faible. En effet, dans ce cas le pic secondaire de la fonction d'autocorrélation, dû à la cyclostationnarité du signal, s'estompe voire disparaît dans le bruit. Il est alors impossible de déterminer précisément l'écart entre le pic principal et le pic secondaire qui permet d'estimer le paramètre $NT_c$.

Le document YUCEK T ET AL: "A novél sub-optimum maximum-likelihood modulation classification algorithm for adaptive OFDM systems" montre une méthode d'estimation à l'aveugle de la modulation d'un signal OFDM.

Le but de la présente invention est donc de proposer une méthode d'estimation à l'aveugle de paramètres d'un signal OFDM qui ne présente pas les inconvénients précités.

Un but subsidiaire de la présente invention est de permettre une synchronisation temporelle et fréquentielle du récepteur OFDM qui soit rapide et ne nécessite pas de séquence d'apprentissage.

**EXPOSÉ DE L'INVENTION**

La présente invention est définie selon un premier mode de réalisation par une méthode d'estimation aveugle d'au moins un paramètre d'un signal OFDM comprenant une pluralité de symboles OFDM, dans laquelle le signal OFDM est échantillonné en bande de base pendant une période d'observation donnée pour obtenir une pluralité d'échantillons et que l'on calcule, pour une pluralité de valeurs dudit paramètre et un bloc de symboles de modulation d'une constellation de modulation, une fonction de coût dépendant d'une distance entre un vecteur **y** constitué par la pluralité d'échantillons et un vecteur $\mathbf{H}_\theta\mathbf{a}$ où **a** est constitué par les symboles dudit bloc et $\mathbf{H}_\theta$ est une matrice représentant la modulation des sous-porteuses du multiplex OFDM par lesdits symboles de modulation, ladite matrice dépendant du paramètre à estimer, ladite fonction de coût étant moyennée pour chaque valeur du paramètre sur un ensemble de blocs de symboles possibles pour obtenir une valeur moyennée de la fonction de coût, l'estimation du paramètre étant obtenue comme la valeur du paramètre correspondant à la valeur moyennée la plus faible.

Selon un exemple, le(s) paramètre(s) du signal OFDM est (sont) le nombre de sous-porteuses de ce signal et/ou la durée du préfixe d'un symbole OFDM et/ou la durée utile d'un symbole OFDM.

Selon un second mode de réalisation, l'invention concerne également une méthode d'estimation aveugle d'au moins un paramètre d'un signal OFDM comprenant une pluralité de symboles OFDM, caractérisée en ce que le signal OFDM est échantillonné en bande de base pendant une période d'observation donnée pour obtenir une pluralité **M** d'échantillons et que l'on calcule pour une pluralité de valeurs dudit paramètre une fonction de coût dépendant d'une distance entre un vecteur **y** constitué par ladite pluralité d'échantillons et un vecteur $\mathbf{H_\theta H_\theta^\dagger y}$ où $\mathbf{H_\theta}$ est une matrice représentant la modulation des sous-porteuses du multiplex OFDM par un bloc de symboles de modulation, ladite matrice dépendant du paramètre à estimer, et où $\mathbf{H_\theta^\dagger}$ est la matrice pseudo-inverse de $\mathbf{H_\theta}$, l'estimation du paramètre étant obtenue comme la valeur du paramètre correspondant à la valeur la plus faible de la fonction de coût sur ladite pluralité de valeurs du paramètre.

Avantageusement, la matrice pseudo-inverse $\mathbf{H_\theta^\dagger}$ est calculée comme $\dfrac{\mathbf{H_\theta^H}}{q(1+D/N)}$ où $\mathbf{H_\theta^H}$ est la transposée conjuguée de la matrice $H_\theta$, *q* est une valeur d'essai du taux d'échantillonnage du signal OFDM, *D* et *N* sont respectivement une valeur d'essai de longueur de préfixe et une valeur d'essai de longueur utile exprimées en nombre de chips.

Un troisième mode de réalisation de l'invention concerne une méthode d'estimation aveugle d'au moins un paramètre θ d'un signal OFDM comprenant une pluralité de symboles OFDM, caractérisée en ce que le signal OFDM est échantillonné en bande de base pendant une période d'observation donnée pour obtenir une pluralité d'échantillons et que l'on calcule pour une pluralité de valeurs dudit paramètre une fonction de coût Ω, fonction décroissante de la probabilité conditionnelle gaussienne $p_g$ (y|θ), où **y** est un vecteur constitué par ladite pluralité d'échantillons et $p_g(y|\theta)$ est obtenue à partir d'une distribution gaussienne des symboles de modulation modulant les différentes sous-porteuses du multiplex OFDM pour ladite pluralité de symboles OFDM, l'estimation du paramètre étant obtenue comme la valeur du paramètre correspondant à la valeur la plus faible de la fonction de coût sur ladite pluralité de valeurs du paramètre.

Avantageusement ladite fonction de coût est une fonction de -log $p_g(y|\theta)$.

Selon un premier exemple, ladite fonction de coût peut être calculée au moyen de l'expression :

$$\Omega\left(-\log p_g\left(\mathbf{y}|\boldsymbol{\theta}\right)\right) =$$

$$\det\left(2\sigma_a^2\mathbf{H_\theta^H H_\theta} + 2N_0\mathbf{I_{KN}}\right) - \frac{\sigma_a^2}{2N_0}\mathbf{y^H H_\theta}\left(\sigma_a^2\mathbf{H_\theta^H H_\theta} + N_0\mathbf{I_{KN}}\right)^{-1}\mathbf{H_\theta^H y}$$

où $\mathbf{H_\theta}$ est une matrice représentant la modulation des sous-porteuses du multiplex OFDM par lesdits symboles de modulation, ladite matrice dépendant du paramètre à estimer, $\mathbf{H_\theta^H}$ est la transposée conjuguée de la matrice $\mathbf{H_\theta}$, $\mathbf{I_{KN}}$ est la matrice identité, $\sigma_a^2$ une estimation de la variance des symboles de modulation, $N_0$ est une estimation de la densité de bruit et det (.) le déterminant.

Selon un second exemple, la fonction de coût est obtenue à partir de l'expression :

$$\Omega\left(-\log p_g\left(\mathbf{y}|\boldsymbol{\theta}\right)\right) = KN\log\left(\omega_a^2\right) - \frac{\sigma_a^2}{N_0\omega_a^2}\mathbf{y^H H_\theta H_\theta^H y}$$

où $\omega_a^2 = 2\sigma_a^2 q\left(1+\dfrac{D}{N}\right) + 2N_0$ où $\mathbf{H_\theta}$ est une matrice représentant la modulation des sous-porteuses d'un multiplex OFDM par lesdits symboles de modulation, ladite matrice dépendant du paramètre à estimer, $\mathbf{H_\theta^H}$ est la transposée conjuguée de la matrice $\mathbf{H_\theta}$ $\mathbf{I_{KN}}$ est la matrice identité, $\sigma_a^2$ une estimation de la variance des symboles de modulation, $N_0$ la densité de bruit, *q* est une valeur d'essai du taux d'échantillonnage du signal OFDM, *D* et *N* sont respectivement une valeur d'essai de longueur de préfixe et une valeur d'essai de longueur utile exprimées en nombre de chips.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 illustre de manière schématique un signal OFDM ;
La Fig. 2 illustre de manière schématique un récepteur OFDM connu de l'état de la technique ;
La Fig. 3 donne un organigramme de la méthode d'estimation de paramètres d'un signal OFDM selon un premier mode de réalisation de l'invention ;
La Fig. 4 donne un organigramme de la méthode d'estimation de paramètres d'un signal OFDM selon un second mode de réalisation de l'invention ;
La Fig. 5 donne les performances relatives de différentes méthodes d'estimation de paramètres d'un signal OFDM, selon l'invention et selon l'état de la technique.

## EXPOSÉ DÉTAILLÉ DE MODES DE RÉALISATION PARTICULIERS

Nous considérerons dans la suite le cas d'un système de télécommunication utilisant une modulation OFDM. Nous supposerons que le signal OFDM émis a la forme donnée par l'expression (1) et que les symboles OFDM peuvent contenir ou non un préfixe. Dans un souci de simplification, nous considérerons qu'ils contiennent un préfixe mais que celui-ci peut être vide *(D=0)* .

Nous nous placerons dans le cadre d'une estimation aveugle d'au moins un paramètre du signal OFDM, notamment d'un paramètre de modulation OFDM, tel que le nombre sous-porteuses, l'espacement fréquentiel entre ces sous-porteuses ou de manière équivalente la durée utile des symboles OFDM. L'ensemble des paramètres à estimer est représenté par un vecteur $\theta$, par exemple $\theta=(N,DT_c,NT_c)$. Dans certains cas, cet ensemble peut être réduit à un singleton. Par exemple, le nombre $N$ de porteuses et la durée du symbole OFDM $T_s=(N+D)T_c$ peuvent être connus, le paramètre à estimer à l'aveugle étant la durée utile $NT_c$.

Le signal reçu par le récepteur peut s'exprimer, après démodulation en bande de base et échantillonnage à une fréquence $1/T_e$ supérieure à la fréquence à la fréquence de Nyquist $1/T_c$, par :

$$y_a(m) = \sum_{\ell=0}^{L} \lambda_\ell s_a(m - \tau_\ell) + b(m) \qquad (4)$$

où les $\lambda_\ell$ et $\tau_\ell$ sont respectivement les coefficients complexes d'atténuation et les retards associés aux différents trajets du canal exprimés en nombres d'échantillons, $L$ est le nombre total de trajets et $b(m)=b(mT_e)$ où $b(t)$ est un bruit blanc additif gaussien.

Sans perte de généralité mais par souci de simplification, nous nous restreindrons par la suite au cas d'un canal monotrajet. Dans ce cas, on peut montrer que l'équation (4) peut se mettre sous la forme matricielle :

$$\mathbf{y} = \mathbf{H_\theta a + b} \qquad (5)$$

où $y = (y(0), y(1),..., y(M\text{-}1))^T$, $(.)^T$ représente l'opération de transposition, $M=\lfloor T_0/T_e \rfloor$ où $T_0$ est la longueur de la fenêtre d'observation du signal OFDM et $[x]$ est le plus grand entier inférieur ou égal à $x$, $a_k = (a_{k,0}, a_{k,1},... a_{k,M\text{-}1})^T$ et

$$\mathbf{a} = \left(\mathbf{a_0^T, a_1^T, .., a_{K\text{-}1}^T}\right)^T$$ avec $K=\lceil T_0/T_s \rceil$ et $[x]$ est le plus petit entier supérieur ou égal à $x$, b=$(b(0),b(1),...,b(M\text{-}1))^T$. Autrement dit, $\mathbf{y}$ est le vecteur de taille $M$ constitué des échantillons reçus en bande de base, $\mathbf{a}$ est un vecteur de taille $KN$ représentatif de la séquence des $KN$ symboles de modulation $a_{k,n}$ modulant les sous-porteuses $n=0,..,N\text{-}1$ des symboles OFDM $k=0,..,K\text{-}1$ dans la fenêtre d'observation, et $\mathbf{b}$ est le vecteur constitué des échantillons de bruit.

De manière générale, la matrice $H_\theta$ est représentative du canal et de la modulation OFDM, cette modulation étant paramétrée par un ensemble $\theta$ de paramètre, par exemple $\theta$ est le triplet $\theta=(N,DT_c,NT_c)$. Nous nous placerons dans le cas d'un canal à évanouissement uniforme (*flat fading channel*). La matrice $\mathbf{H_\theta}$ n'est alors représentative que de la modulation OFDM. Plus précisément, si la fonction de mise en forme $g(t)$ peut être approximée par une fonction fenêtre, les éléments de la matrice $\mathbf{H_\theta}$ sont nuls exceptés ceux définis à un facteur multiplicatif près par :

$$H_{\theta}\left(m, k_m N + n\right) = \frac{1}{\sqrt{N}} e^{2i\pi nm\frac{T_e}{NT_c}} e^{2i\pi n(k_m+1)\frac{DT_c}{NT_c}} \qquad (6)$$

où $m = 0,..,M\text{-}1$, $n = 0,..,N\text{-}1$ et où $k_m$ est l'entier unique vérifiant :

$$m\frac{T_e}{(N+D)T_c} - 1 < k_m \leq m\frac{T_e}{(N+D)T_c} \qquad (7)$$

De manière générale, il est proposé selon l'invention de rechercher les valeurs des paramètres $\hat{\theta}$ du signal OFDM selon un critère de maximum de vraisemblance aussi dénommé ML (*Maximum Likelihood*). Selon ce critère, on recherche $\hat{\theta}$ qui maximise la probabilité conditionnelle $p(y|\theta)$, c'est-à-dire la probabilité conditionnelle $p(y|\theta,a)$ prise en moyenne sur les valeurs de **a** :

$$p(\mathbf{y}|\boldsymbol{\theta}) = E_a\left(p(\mathbf{y}|\boldsymbol{\theta}, \mathbf{a})\right) \qquad (8)$$

Les composantes du vecteur de bruit **b** étant supposées indépendantes, identiquement distribuées et gaussiennes, cela revient à rechercher $\theta$ qui minimise la distance quadratique entre le vecteur du signal reçu **y** et le vecteur $\mathbf{H}_{\theta}\mathbf{a}$, $\mathbf{H}_{\theta}$ étant une matrice représentative de la fonction de transfert du canal et des paramètres $\theta$ du signal OFDM, telle que donnée par exemple par (6), la distance étant prise en valeur moyenne sur le vecteur des symboles de modulation **a**, à savoir :

$$\hat{\boldsymbol{\theta}} = \arg\min_{\boldsymbol{\theta}} E_a\left(\|\mathbf{y} - \mathbf{H}_{\boldsymbol{\theta}}\mathbf{a}\|^2\right) \qquad (9)$$

et de manière plus générale :

$$\hat{\boldsymbol{\theta}} = \arg\min_{\boldsymbol{\theta}} E_a\left(\Omega\left(\|\mathbf{y} - \mathbf{H}_{\boldsymbol{\theta}}\mathbf{a}\|\right)\right) \qquad (9')$$

où $\Omega$ est une fonction de coût qui croît avec la distance $\|\mathbf{y}\text{-}\mathbf{H}_{\theta}\mathbf{a}\|$.

Selon un premier mode de réalisation de l'invention, l'estimation des paramètres du signal OFDM est effectuée à partir des expressions (9) ou (9'). Cette estimation peut par exemple être réalisée à l'aide d'une méthode de type Monte-Carlo lorsque le récepteur connaît la loi de probabilité des symboles $a_{k,n}$.

Selon un second mode de réalisation de l'invention, l'estimation des paramètres du signal OFDM, $\hat{\theta}$, peut être simplifiée en considérant que le vecteur **a** est constitué de symboles déterministes. Autrement dit, ce critère de maximum de vraisemblance ainsi simplifié, encore dénommé critère de maximum de vraisemblance déterministe ou DML (*Deterministic Maximum Likelihood*) ne prend pas en compte la distribution de probabilité de **a** mais utilise une première estimation de **a** :

$$\hat{\mathbf{a}}_0 = \mathbf{H}_{\boldsymbol{\theta}_0}^{\dagger}\mathbf{y} \qquad (10)$$

où $\theta_0$ est une valeur arbitraire, choisie de préférence de l'ordre de grandeur de la valeur réelle,

$$H_{\theta_0}^\dagger = \left( H_{\theta_0}^H H_{\theta_0} \right)^{-1} H_{\theta_0}^H$$ est la matrice pseudo-inverse de $H_{\theta_0}$.

Les valeurs estimées des paramètres de signal OFDM, notées de manière synthétique sous la forme d'un vecteur $\hat{\theta}$, par exemple $\hat{\theta} = \left( \hat{N}, \widehat{DT}_c, \widehat{NT}_c \right)$ sont ensuite déterminées au moyen dé

$$\hat{\theta} = \arg \max_{\theta} p\left( y \middle| \theta, a = \hat{a}_0 \right) \qquad (11)$$

Si l'on suppose que les composantes de **b** sont décorrélées et correspondent à un bruit blanc, hypothèse vérifiée en pratique si la fréquence d'échantillonnage $1/T_e$ est suffisamment grande par rapport à la fréquence de Nyquist $1/T_c$, l'expression (11) peut s'écrire de manière équivalente :

$$\hat{\theta} = \arg \min_{\theta} \left( \left\| y - H_\theta \hat{a}_0 \right\|^2 \right) \qquad (12)$$

ou encore, en remplaçant $\overline{a}_0$ par son expression (10) :

$$\hat{\theta} = \arg \min_{\theta} \left( \left\| \left( I_M - H_\theta \left( H_{\theta_0}^H H_{\theta_0} \right)^{-1} H_{\theta_0}^H \right) y \right\|^2 \right) \qquad (13)$$

et, de manière plus générale :

$$\hat{\theta} = \arg \min_{\theta} \left( \Omega \left( \left\| \left( I_M - H_\theta \left( H_{\theta_0}^H H_{\theta_0} \right)^{-1} H_{\theta_0}^H \right) y \right\| \right) \right) \qquad (13')$$

où $\Omega$ est une fonction de coût qui croît avec la distance $\left\| \left( I_M - H_\theta \left( H_{\theta_0}^H H_{\theta_0} \right)^{-1} H_{\theta_0}^H \right) y \right\|$

On peut montrer que si $T_0$ est un multiple entier de $T_s$, autrement dit si la longueur de la fenêtre d'observation est un multiple entier du temps symbole OFDM, la matrice $H_{\theta_0}^H H_{\theta_0}$ se réduit alors à:

$$H_{\theta_0}^H H_{\theta_0} = q\left( 1 + \frac{D}{N} \right) I_{KN} \qquad (14)$$

et donc la matrice pseudo-inverse $H_{\theta_0}^\dagger$ :

$$\mathbf{H}^{\dagger}_{\theta_0} = \frac{\mathbf{H}^{\mathbf{H}}_{\theta_0}}{q\left(1+D/N\right)} \tag{14'}$$

où $q = T_e/T_c$ est le taux d'échantillonnage du signal OFDM utilisé pour les valeurs d'essai des paramètres $\theta_0$ et $\mathbf{I_{KN}}$ est la matrice unité de taille $KN{\times}KN$.

En pratique, l'expression (14) s'avère être une approximation satisfaisante de $\mathbf{H}^{\mathbf{H}}_{\theta_0}\mathbf{H}_{\theta_0}$, même si la longueur de la fenêtre d'observation n'est pas un multiple entier de la durée d'un symbole OFDM. Dans le cadre de cette approximation, le critère (13') se simplifie comme suit :

$$\hat{\boldsymbol{\theta}} = \arg\min_{\boldsymbol{\theta}} \left( \Omega\left( \left\| \left( \mathbf{I_M} - \frac{\mathbf{H}_{\boldsymbol{\theta}}\mathbf{H}^{\mathbf{H}}_{\theta_0}}{q(1+D/N)} \right) \mathbf{y} \right\| \right) \right) \tag{15}$$

où $\Omega$ est la fonction de coût précitée. Les valeurs $q,D,N$ figurant dans la partie droite de l'expression (15) dépendent des valeurs d'essai des paramètres $\theta_0$.

Il convient de noter que le processus d'estimation de l'ensemble des paramètres $\theta$ peut être itéré pour en améliorer la précision. En effet, la valeur estimée $\hat{\theta}$ donnée par (13), (13') ou (15) peut ensuite être utilisée comme nouvelle valeur d'essai $\theta_1 = \hat{\theta}$, autrement dit cette première estimation des paramètres du signal OFDM peut être utilisée pour calculer une seconde matrice $\mathbf{H}_{\theta_1}$, par exemple à l'aide de l'expression (6), et à une seconde estimation $\hat{\theta}_{(2)}$ à partir de (13), (13') ou (15) dans lesquelles la matrice $\mathbf{H}_{\theta_0}$ a été remplacée par la matrice $\mathbf{H}_{\theta_1}$. Cette seconde estimation peut être à nouveau utilisée comme valeur d'essai et ainsi de suite.

La méthode itérative précédente fonctionne bien si la valeur d'essai est proche de la valeur réelle des paramètres. Elle peut conduire toutefois à une estimation erronée dans le cas où $\theta_0$ est trop éloigné des paramètres réels, par exemple si le nombre de porteuses, la longueur de préfixe et la longueur utile du symbole OFDM, pris comme valeurs d'essai sont trop éloignés des valeurs réelles des paramètres du signal OFDM. Dans ce cas, la méthode d'estimation peut ne pas converger ou converger vers un minimum local de la fonction de coût.

Afin de remédier à cet inconvénient, une variante de la méthode d'estimation selon le second mode de réalisation de l'invention consiste à utiliser une expression « fermée » de la distance apparaissant en (13), (13') et (15), soit respectivement :

$$\hat{\boldsymbol{\theta}} = \arg\min_{\boldsymbol{\theta}} \left( \left\| \left( \mathbf{I_M} - \mathbf{H}_{\boldsymbol{\theta}}\left( \mathbf{H}^{\mathbf{H}}_{\boldsymbol{\theta}}\mathbf{H}_{\boldsymbol{\theta}} \right)^{-1} \mathbf{H}^{\mathbf{H}}_{\boldsymbol{\theta}} \right) \mathbf{y} \right\|^2 \right) = \arg\min_{\boldsymbol{\theta}} \left( \left\| \left( \mathbf{I_M} - \mathbf{H}_{\boldsymbol{\theta}}\mathbf{H}^{\dagger}_{\boldsymbol{\theta}} \right) \mathbf{y} \right\|^2 \right) \tag{16}$$

$$\hat{\boldsymbol{\theta}} = \arg\min_{\boldsymbol{\theta}} \left( \Omega\left( \left\| \left( \mathbf{I_M} - \mathbf{H}_{\boldsymbol{\theta}}\mathbf{H}^{\dagger}_{\boldsymbol{\theta}} \right) \mathbf{y} \right\| \right) \right) \tag{16'}$$

$$\hat{\boldsymbol{\theta}} = \underset{\boldsymbol{\theta}}{\arg\min} \left( \Omega \left( \left\| \left( \mathbf{I_M} - \frac{\mathbf{H_\theta H_\theta^H}}{q(1+D/N)} \right) \mathbf{y} \right\| \right) \right) \tag{17}$$

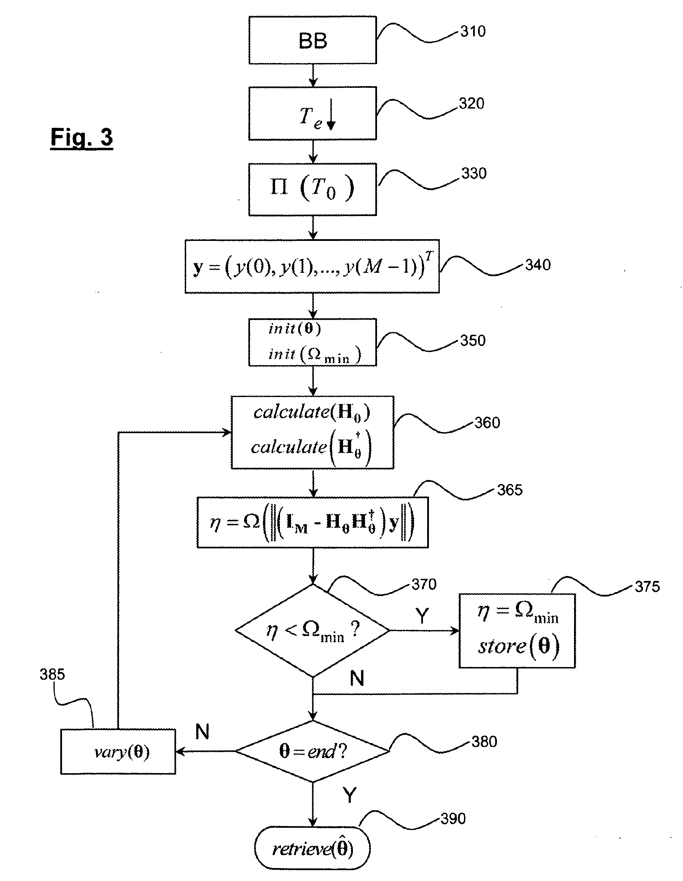

La Fig. 3 illustre une méthode d',estimation aveugle d'un paramètre de signal OFDM selon ladite variante du second mode de réalisation de l'invention.

A l'étape 310, le signal OFDM est démodulé en bande de base, puis échantillonné en 320 à une fréquence $1/T_e$ supérieure à la fréquence de Nyquist. On connaît généralement l'ordre de grandeur de $1/T_c$, autrement dit de la largeur de bande du signal OFDM, ce qui permet de choisir la fréquence d'échantillonnage en conséquence.

A l'étape 330, on sélectionne un bloc de *M* échantillons complexes correspondant à une fenêtre d'observation de largeur donnée $T_0$. Si l'on connaît la durée $T_s$ du symbole OFDM, cette largeur est avantageusement choisie comme un multiple de $T_s$.

En 340, on construit le vecteur **y** à partir des *M* échantillons complexes, on initialise en 350 les valeurs des paramètres de θ, ainsi que le minimum de la fonction de coût à une valeur élevée $\Omega_{min}$, puis on entre dans une boucle itérative qui parcourt un pavé de valeurs de ces paramètres.

A chaque itération, on calcule en 360 la matrice $\mathbf{H_\theta}$ et selon le cas, la matrice pseudo-inverse $\mathbf{H_\theta^\dagger}$ (expressions 16, 16') ou la matrice $\mathbf{H_\theta H_\theta^H}$ (expression 17) puis, en 365, la valeur η prise de la fonction par la fonction de coût Ω, pour le vecteur courant θ.

On teste en 370 si cette valeur est inférieure à $\Omega_{min}$. Si c'est le cas $\Omega_{min}$ est mis à jour par η en 375 et les valeurs correspondantes des paramètres θ sont stockées en mémoire. On teste ensuite en 380 si le pavé de paramètres a été entièrement parcouru. Si c'est le cas on sort en 390. Dans la négative on modifie les paramètres de θ en 385 et on retourne à l'étape de calcul 360. Les valeurs des paramètres estimés, $\hat{\theta}$, sont récupérées de la mémoire.

La méthode d'estimation selon le second mode de réalisation telle qu'exposée ci-dessus présente, comme on le verra plus loin, un taux d'erreur plus faible que la méthode d'estimation par autocorrélation connue de l'état de la technique.

Une méthode d'estimation selon un troisième mode de réalisation est toutefois préférée pour de faibles rapports signal à bruit.

Cette méthode fait l'hypothèse que les symboles de modulation $a_{k,n}$ peuvent être assimilés à des variables aléatoires complexes indépendantes, identiquement distribuées, circulaires, symétriques et gaussiennes. On rappelle qu'une variable aléatoire complexe est circulaire symétrique et gaussienne si ses composantes réelle et imaginaire sont des variables indépendantes gaussiennes et de même variance. Dans ce cas, le vecteur **y** défini par (5) est lui-même une variable aléatoire vectorielle, circulaire, symétrique, gaussienne et de matrice de covariance:

$$E\left(\mathbf{yy^H}\right) = 2\sigma_a^2 \mathbf{H_\theta H_\theta^H} + 2N_0 \mathbf{I_M} \tag{18}$$

La densité de probabilité conditionnelle de **y** par rapport à θ dans l'hypothèse gaussienne, encore appelée probabilité conditionnelle gaussienne et notée $p_g(y|\theta)$ peut alors s'exprimer comme suit :

$$p(\mathbf{y}|\boldsymbol{\theta}) = \frac{1}{(2\pi)^M \det\left(2\sigma_a^2 \mathbf{H_\theta H_\theta^H} + 2N_0 \mathbf{I_M}\right)} \exp{-\frac{1}{2}} \mathbf{y^H} \left(\sigma_a^2 \mathbf{H_\theta H_\theta^H} + N_0 \mathbf{I_M}\right)^{-1} \mathbf{y}$$

$$\tag{19}$$

La distribution de probabilité donnée(19) diffère de la distribution réelle dans la mesure où les symboles de modulation appartiennent généralement à une constellation de points. En pratique, toutefois, cette modélisation est satisfaisante sous réserve d'un choix correct de la variance $\sigma_a^2$.

Par ailleurs, si **I** est la matrice identité de taille donnée et **A** est une matrice quelconque de même taille, on a les propriétés suivantes :

$$\det\left(\mathbf{I} + \mathbf{A}\mathbf{A}^{\mathbf{H}}\right) = \det\left(\mathbf{I} + \mathbf{A}^{\mathbf{H}}\mathbf{A}\right) \qquad \mathtt{et} \qquad (20)$$

$$\left(\mathbf{I} + \mathbf{A}\mathbf{A}^{\mathbf{H}}\right)^{-1} = \mathbf{I} - \mathbf{A}(\mathbf{I} + \mathbf{A}^{\mathbf{H}}\mathbf{A})^{-1}\mathbf{A}^{\mathbf{H}} \qquad (21)$$

Compte tenu des propriétés (20) et (21), la densité de probabilité conditionnelle gaussienne (19) peut être reformulée, à un coefficient multiplicatif près :

$$p_g\left(\mathbf{y}|\boldsymbol{\theta}\right) \propto$$

$$\frac{1}{\det\left(2\sigma_a^2\mathbf{H}_{\boldsymbol{\theta}}^{\mathbf{H}}\mathbf{H}_{\boldsymbol{\theta}} + 2N_0\mathbf{I}_{\mathbf{KN}}\right)} \exp\left(\frac{\sigma_a^2}{2N_0}\mathbf{y}^{\mathbf{H}}\mathbf{H}_{\boldsymbol{\theta}}\left(\sigma_a^2\mathbf{H}_{\boldsymbol{\theta}}^{\mathbf{H}}\mathbf{H}_{\boldsymbol{\theta}} + N_0\mathbf{I}_{\mathbf{KN}}\right)^{-1}\mathbf{H}_{\boldsymbol{\theta}}^{\mathbf{H}}\mathbf{y}\right)$$

$$(22)$$

Rechercher le maximum de la probabilité conditionnelle gaussienne $p_g(\mathrm{y}|\theta)$ revient à rechercher le minimum de $-\log p_g(\mathrm{y}|\theta)$. Le vecteur des paramètres du signal OFDM qui correspond au maximum de vraisemblance est alors donné par :

$$\hat{\boldsymbol{\theta}} = \arg\min_{\boldsymbol{\theta}}\left(\Omega\left(-\log p_g\left(\mathbf{y}|\boldsymbol{\theta}\right)\right)\right) \qquad (23)$$

où $\Omega$ est une fonction de coût qui croît avec $-\log p_g(\mathrm{y}|\theta)$.

D'après (22), un exemple de fonction de coût conduisant au maximum de vraisemblance, dans l'hypothèse gaussienne, peut s'écrire :

$$\Omega\left(-\log p_g\left(\mathbf{y}|\boldsymbol{\theta}\right)\right) =$$

$$\det\left(2\sigma_a^2\mathbf{H}_{\boldsymbol{\theta}}^{\mathbf{H}}\mathbf{H}_{\boldsymbol{\theta}} + 2N_0\mathbf{I}_{\mathbf{KN}}\right) - \frac{\sigma_a^2}{2N_0}\mathbf{y}^{\mathbf{H}}\mathbf{H}_{\boldsymbol{\theta}}\left(\sigma_a^2\mathbf{H}_{\boldsymbol{\theta}}^{\mathbf{H}}\mathbf{H}_{\boldsymbol{\theta}} + N_0\mathbf{I}_{\mathbf{KN}}\right)^{-1}\mathbf{H}_{\boldsymbol{\theta}}^{\mathbf{H}}\mathbf{y}$$

$$(24)$$

De même que dans le second mode de réalisation, lorsque la longueur de la fenêtre d'observation est un multiple entier de la durée d'un symbole OFDM et de manière plus générale lorsque l'approximation (14) est valide, la fonction de coût (24) peut prendre la forme simplifiée:

$$\Omega\left(-\log p_g\left(\mathbf{y}|\boldsymbol{\theta}\right)\right) = KN \log\left(\omega_a^2\right) - \frac{\sigma_a^2}{N_0\omega_a^2} \mathbf{y}^{\mathbf{H}}\mathbf{H}_{\boldsymbol{\theta}}\mathbf{H}_{\boldsymbol{\theta}}^{\mathbf{H}}\mathbf{y}$$

$$(25)$$

avec

$$\omega_a^2 = 2\sigma_a^2 q\left(1+\frac{D}{N}\right) + 2N_0 \ . \qquad (26).$$

Le calcul de la fonction de coût selon (24) ou (25) nécessite de connaître les valeurs de $N_0$ et $\sigma_a$. Le niveau de bruit, $N_0$, pourra être estimé soit par connaissance de la température de bruit dans la bande soit par des mesures réalisées en absence de signal. Le niveau du signal $\sigma_a$ pourra être estimé par une mesure du niveau de puissance dans la bande d'intérêt, égale à $N_0 + \sigma_a^2$ ..

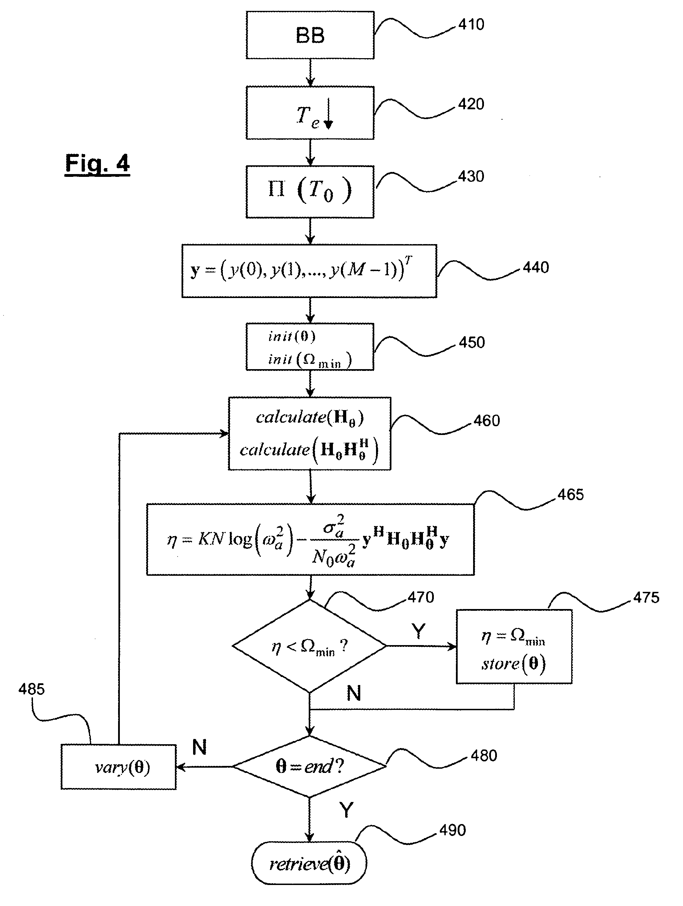

La Figure 4 représente schématiquement une méthode d'estimation aveugle d'un paramètre de signal OFDM selon un second mode de réalisation de l'invention.

Les étapes 410 à 450 sont respectivement identiques aux étapes 310 à 350 et ne seront donc pas à nouveau décrites.

A chaque itération de la boucle on calcule en 460 la matrice $\mathbf{H}_{\theta}$, puis la matrice $\mathbf{H}_{\boldsymbol{\theta}}\mathbf{H}_{\boldsymbol{\theta}}^{\mathbf{H}}$. On en déduit ensuite la valeur η prise de la fonction par la fonction de coût Ω, pour le vecteur courant θ, selon l'expression (24) ou (25). Dans l'exemple illustré, l'expression (25) a été retenue.

On teste en 470 si cette valeur est inférieure à $\Omega_{\text{min}}$. Si c'est le cas $\Omega_{\text{min}}$ est mis à jour par η en 475 et les valeurs correspondantes des paramètres θ sont stockées en mémoire. On teste ensuite en 480 si le pavé de paramètres a été entièrement parcouru. Si c'est le cas on sort en 490. Dans la négative on modifie les paramètres de θ en 485 et on retourne à l'étape de calcul 460. Les valeurs des paramètres estimés, $\hat{\theta}$, sont les valeurs présentes dans la mémoire.

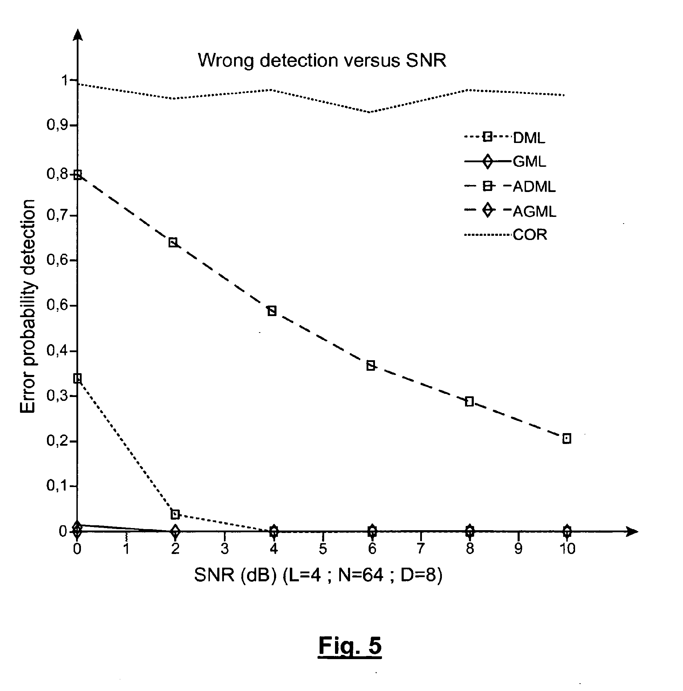

La Fig. 5 montre le taux d'erreur d'estimation d'un paramètre de signal OFDM, ici la durée de symbole OFDM $NT_c$ en fonction du rapport signal à bruit.

La courbe désignée par COR est celle obtenue par la méthode d'estimation basée sur la fonction d'autocorrélation du signal OFDM, telle que connue de l'état de la technique.

La courbe désignée par DML est celle basée sur la méthode d'estimation selon la variante du second mode de réalisation de l'invention (expression (16)), celle désignée par ADML étant relative à la version simplifiée (expression (17)).

La courbe désignée par GML est celle basée sur la méthode d'estimation selon le troisième mode de réalisation de l'invention (expression (24)), celle désignée par AGML étant relative à la version simplifiée (expression (25)).

On constate que quel que soit le niveau de rapport signal à bruit les méthodes d'estimation DML, GML ainsi que leurs versions simplifiées ADML et AGML sont plus performantes que celle de l'état de la technique.

En outre, les méthodes GML et AGML donnent une estimation plus fiable que les méthodes DML et ADML, ce en particulier pour les faibles rapports signal à bruit. On pourra donc envisager d'opter pour l'une ou l'autre méthode en fonction du rapport signal à bruit ou du temps de traitement.

**Revendications**

1.    Méthode d'estimation aveugle d'au moins un paramètre (9) de modulation d'un signal OFDM comprenant une pluralité de symboles OFDM, dans laquelle le signal OFDM est échantillonné en bande de base pendant une période d'observation donnée ($T_0$) pour obtenir une pluralité d'échantillons et on calcule, pour une pluralité de valeurs dudit paramètre et un bloc de symboles de modulation ($a_{k,n}$) d'une constellation de modulation, une fonction de coût (Ω) dépendant d'une distance entre un vecteur **y** constitué par la pluralité d'échantillons et un vecteur $\mathbf{H}_{\theta}\mathbf{a}$ où **a** est constitué par les symboles dudit bloc et $\mathbf{H}_\theta$ est une matrice représentant la modulation des sous-porteuses du multiplex OFDM par, lesdits symboles de modulation, ladite matrice dépendant dudit paramètre à estimer, ladite fonction de coût étant moyennée pour chaque valeur du paramètre sur un ensemble de blocs de symboles possibles pour obtenir une valeur moyennée ($E_a(\Omega(||y-H_\theta a||))$) de la fonction de coût, l'estimation du paramètre étant obtenue comme la valeur, du paramètre ($\hat{\theta}$) correspondant à la valeur moyennée la plus faible

$$( \hat{\boldsymbol{\theta}} = \arg\min_{\boldsymbol{\theta}} E_a \left( \Omega \left( \|\mathbf{y} - \mathbf{H_\theta a}\| \right) \right) )$$

2. Méthode d'estimation selon la revendication 1, **caractérisée en ce que** le (s) paramètre(s) de modulation du signal OFDM est (sont) le nombre ($N$) de sous-porteuses de ce signal et/ou la durée du préfixe ($DT_c$) d'un symbole OFDM et/ou la durée utile ($NT_c$) d'un symbole OFDM.

3. Méthode d'estimation aveugle d'au moins un paramètre ($\theta$) de modulation d'un signal OFDM comprenant une pluralité de symboles OFDM, le signal OFDM est échantillonné en bande de base pendant une période d'observation donnée ($T_0$) pour obtenir une pluralité ***M*** d'échantillons et on calcule pour une pluralité de valeurs dudit paramètre une fonction de coût ($\Omega$) dépendant d'une distance entre un vecteur **y** constitué par ladite pluralité d'échantillons et un vecteur $\mathbf{H_\theta H_\theta^\dagger y}$ où $\mathbf{H}_\theta$ est une matrice représentant la modulation des sous-porteuses du multiplex OFDM, par un bloc de symboles de modulation, ladite matrice dépendant du paramètre à estimer, et où $\mathbf{H_\theta^\dagger}$ est la matrice pseudo-inverse de $\mathbf{H}_\theta$, l'estimation du paramètre étant obtenue comme la valeur du paramètre ($\hat{\theta}$) correspondant à la valeur la plus faible de la fonction de coût sur ladite pluralité de valeurs du paramètre.

4. Méthode d'estimation selon la revendication 3, **caractérisée en ce que** la matrice pseudo-inverse $\mathbf{H_\theta^\dagger}$ est calculée comme $\dfrac{\mathbf{H_\theta^H}}{q(1+D/N)}$ où $\mathbf{H_\theta^H}$ est la transposée conjuguée de la matrice $H_\theta$, $q$ est une valeur d'essai du taux d'échantillonnage du signal OFDM, $D$ et $N$ sont respectivement une valeur d'essai de longueur de préfixe et une valeur d'essai de longueur utile exprimées en nombre de chips ($T_c$).

5. Méthode d'estimation aveugle d'au moins un paramètre de modulation $\theta$ d'un signal OFDM comprenant une pluralité de symboles OFDM, le signal OFDM est échantillonné en bande de base pendant une période d'** observation donnée ($T_0$) pour obtenir une pluralité d'échantillons et on calcule pour une pluralité de valeurs dudit paramètre une fonction de coût $\Omega$, fonction décroissante de la probabilité conditionnelle gaussienne $p_g(y|\theta)$, où **y** est un vecteur constitué par ladite pluralité d'échantillons et $p_g(y|\theta)$ est obtenue à partir d'une distribution gaussienne des symboles de modulation modulant les différentes sous-porteuses du multiplex OFDM pour ladite pluralité de symboles OFDM, l'estimation du paramètre étant obtenue comme la valeur du paramètre ($\theta$) correspondant à la valeur la plus faible de la fonction de coût sur ladite pluralité de valeurs du paramètre.

6. Méthode d'estimation selon la revendication 5, **caractérisée en ce que** ladite fonction de coût est une fonction de $-\log p_g(y|\theta)$.

7. Méthode d'estimation selon la revendication 6, **caractérisée en ce que** ladite fonction de coût est calculée au moyen de l'expression :

$$\Omega\left(-\log p_g\left(\mathbf{y}|\boldsymbol{\theta}\right)\right) =$$
$$\det\left(2\sigma_a^2 \mathbf{H_\theta^H H_\theta} + 2N_0 \mathbf{I_{KN}}\right) - \frac{\sigma_a^2}{2N_0} \mathbf{y^H H_\theta} \left(\sigma_a^2 \mathbf{H_\theta^H H_\theta} + N_0 \mathbf{I_{KN}}\right)^{-1} \mathbf{H_\theta^H y}$$

où $\mathbf{H}_\theta$ est une matrice représentant la modulation des sous-porteuses du multiplex OFDM par lesdits symboles de modulation, ladite matrice dépendant du paramètre à estimer, $\mathbf{H_\theta^H}$ est la transposée conjuguée de la matrice $\mathbf{H}_\theta$,

$I_{KN}$ est la matrice identité, $\sigma_a^2$ une estimation de la variance des symboles de modulation, $N_0$ est une estimations de la densité de bruit et det(.) le déterminant.

8. Méthode d'estimation selon la revendication 6, **caractérisée en ce que** la fonction de coût est obtenue à partir de l'expression :

$$\Omega\left(-\log p_g\left(\mathbf{y}|\theta\right)\right) = KN\log\left(\omega_a^2\right) - \frac{\sigma_a^2}{N_0\omega_a^2}\mathbf{y^H H_\theta H_\theta^H y}$$

où $\omega_a^2 = 2\sigma_a^2 q\left(1+\dfrac{D}{N}\right)+2N_0$

où $\mathbf{H_\theta}$ est une matrice représentant la modulation des sous-porteuses d'un multiplex OFDM par lesdits symboles de modulation, ladite matrice dépendant dudit paramètre à estimer, $\mathbf{H_\theta^H}$ est la transposée conjuguée de la matrice $\mathbf{H_\theta}$, $I_{KN}$ est la matrice identité, $\sigma_a^2$ une estimation de la variance des symboles de modulation, $N_0$ la densité de bruit, $\mathbf{q}$ est une valeur d'essai du taux d'échantillonnage du signal OFDM, $D$ et $N$ sont respectivement une valeur d'essai de longueur de préfixe et une valeur d'essai de longueur utile exprimées en nombre de chips ($T_c$).

**Claims**

1. A method for blind estimation of at least one modulation parameter ($\theta$) of an OFDM signal comprising a plurality of OFDM symbols, wherein the OFDM signal is baseband sampled for a given observation period ($T_0$) to obtain a plurality of samples and one calculates, for a plurality of values of said parameter and a block of modulation symbols ($a_{k,n}$) of a modulation constellation, a cost function ($\Omega$) depending on a distance between a vector **y** made up of the plurality of samples and a vector $\mathbf{H_\theta a}$ where **a** is made up of the symbols of said block and $\mathbf{H_\theta}$ is a matrix representing the modulation of the sub-carriers of the OFDM multiplex by said modulation symbols, said matrix depending on said parameter to be estimated, said cost function being averaged for each value of the parameter on a set of blocks of possible symbols to obtain an averaged value ($E_a(\Omega(||y-H_\theta a||))$) of the cost function, the estimation of the parameter being obtained as the value of the parameter ($\hat{\theta}$) corresponding to the lowest averaged value ($\hat{\theta} = \arg \min E_a(\Omega(||y-H_\theta a||))$).

2. The estimation method according to claim 1, wherein the modulation parameter(s) of the OFDM signal is (are) the number ($N$) of sub-carriers of that signal and/or the duration of the prefix ($DT_c$) of an OFDM symbol and/or the useful duration ($NT_c$) of an OFDM symbol.

3. A method for blind estimation of at least one modulation parameter ($\theta$) of an OFDM signal comprising a plurality of OFDM symbols, wherein the OFDM signal is baseband sampled for a given observation period ($T_0$) to obtain a plurality M of samples and one calculates, for a plurality of values of said parameter, a cost function ($\Omega$) depending on a distance between a vector **y** made up of said plurality of samples and a vector $\mathbf{H_\theta H_\theta^\dagger y}$ where $\mathbf{H_\theta}$ is a matrix representing the modulation of the sub-carriers of the OFDM multiplex by a block of modulation symbols, said matrix depending on the parameter to be estimated, and where $\mathbf{H_\theta^\dagger}$ is the pseudo-inverse matrix of $\mathbf{H_\theta}$, the estimation of the parameter being obtained as the value of the parameter ($\hat{\theta}$) corresponding to the lowest value of the cost function on said plurality of values of the parameter.

4. The estimation method according to claim 3, **characterized in that** the pseudo-inverse matrix $\mathbf{H_\theta^\dagger}$ is calculated

as $\dfrac{\mathbf{H}_\theta^{\mathbf{H}}}{q(1+D/N)}$ where $\mathbf{H}_0^{\mathbf{H}}$ is the conjugated transpose of the matrix $H_\theta$, $q$ is a test value of the sampling rate of the OFDM signal, $D$ and $N$ are respectively a prefix length test value and a useful length test value expressed in number of chips ($T_c$).

5. A method for blind estimation of at least one modulation parameter $\theta$ of an OFDM signal comprising a plurality of OFDM symbols, wherein the OFDM signal is baseband sampled for a given observation period ($T_0$) to obtain a plurality of samples and one calculates, for a plurality of values of said parameter, a cost function $\Omega$, decreasing function of the Gaussian conditional probability $p_g(y|\theta)$, where **y** is a vector made up of said plurality of samples and $p_g(y|\theta)$ is obtained from a Gaussian distribution of the modulation symbols modulating the various sub-carriers of the OFDM multiplex for said plurality of OFDM symbols, the estimation of the parameter being obtained as the value of the parameter ($\hat{\theta}$) corresponding to the lowest value of the cost function on said plurality of values of the parameter.

6. The estimation method according to claim 5, **characterized in that** said cost function is a function of -log $p_g(y|\theta)$.

7. The estimation method according to claim 6, **characterized in that** said cost function can be calculated using the expression:

$$\Omega\left(-\log p_g\left(\mathbf{y}\big|\boldsymbol{\theta}\right)\right) =$$

$$\det\left(2\sigma_a^2\mathbf{H}_\theta^{\mathbf{H}}\mathbf{H}_\theta + 2N_0\mathbf{I}_{\mathbf{KN}}\right) - \frac{\sigma_a^2}{2N_0}\mathbf{y}^{\mathbf{H}}\mathbf{H}_\theta\left(\sigma_a^2\mathbf{H}_\theta^{\mathbf{H}}\mathbf{H}_\theta + N_0\mathbf{I}_{\mathbf{KN}}\right)^{-1}\mathbf{H}_\theta^{\mathbf{H}}\mathbf{y}$$

where $\mathbf{H}_\theta$ is a matrix representing the modulation of the sub-carriers of the OFDM multiplex by said modulation symbols, said matrix depending on the parameter to be estimated, $\mathbf{H}_\theta^{\mathbf{H}}$ is the conjugated transpose of the matrix $H_\theta$, $\mathbf{I}_{\mathbf{KN}}$ is the unit matrix, $\sigma_a^2$ is an estimation of the variance of the modulation symbols, $N_\theta$ is an estimation of the noise density, and det(.) is the determinant.

8. The estimation method according to claim 6, **characterized in that** the cost function is obtained from the expression:

$$\Omega\left(-\log p_g\left(\mathbf{y}\big|\boldsymbol{\theta}\right)\right) = KN\log\left(\omega_a^2\right) - \frac{\sigma_a^2}{N_0\omega_a^2}\mathbf{y}^{\mathbf{H}}\mathbf{H}_\theta\mathbf{H}_\theta^{\mathbf{H}}\mathbf{y}$$

where $\omega_a^2 = 2\sigma_a^2 q\left(1+\dfrac{D}{N}\right) + 2N_0$

where $\mathbf{H}_\theta$ is a matrix representing the modulation of the sub-carriers of an OFDM multiplex by said modulation symbols, said matrix depending on the parameter to be estimated, $\mathbf{H}_\theta^{\mathbf{H}}$ is the conjugated transpose of the matrix $H_0$, $\mathbf{I}_{\mathbf{KN}}$ is the unit matrix, $\sigma_a^2$ is an estimate of the variance of the modulation symbols, $N_0$ is the noise density, $q$ is a test value of the sampling rate of the OFDM signal, $D$ and $N$ are respectively a prefix length test value and a useful length test value expressed in number of chips ($T_c$).

**Patentansprüche**

1. Verfahren zur Blindabschätzung wenigstens eines Modulationsparameters ($\theta$) eines OFDM-Signals, das eine Mehrzahl von OFDM-Symbolen umfasst, wobei das OFDM-Signal während einer gegebenen Beobachtungsperiode ($T_0$) im Basisband abgetastet wird, um eine Mehrzahl von Abtastwerten zu erhalten, und man für eine Mehrzahl von Werten des Parameters sowie einen Block von Modulationssymbolen ($a_{k,n}$) einer Modulationskonstellation eine Kostenfunktion ($\Omega$) berechnet, die abhängt von einem Abstand zwischen einem Vektor **y,** gebildet durch die Mehrzahl von Abtastwerten, und einem Vektor $\mathbf{H}_\theta$a, wobei **a** durch die Symbole des Blocks gebildet und $\mathbf{H}_\theta$ eine Matrix ist, die die Modulation der Unterträger des OFDM-Multiplex durch die Modulationssysmbole repräsentiert, wobei die Matrix von dem abzuschätzenden Parameter abhängt, wobei die Kostenfunktion für jeden Wert des Parameters über eine Gruppe von Blöcken möglicher Symbole gemittelt wird, um einen Mittelwert ($E_a(\Omega(||y-H_\theta a||))$) der Kostenfunktion zu erhalten, wobei die Abschätzung des Parameters als der Wert des Parameters ($\hat{\theta}$) erhalten wird, der dem kleinsten Mittelwert ($\theta = \arg_\theta \min E_a(\Omega(||y-H_\theta a||))$) entspricht.

2. Verfahren zur Abschätzung nach Anspruch 1, **dadurch gekennzeichnet, dass** der/ die Modulationsparameter des OFDM-Signals die Zahl (N) von Unterträgern dieses Signals und/oder die Präfixdauer ($DT_c$) eines OFDM-Symbols und/ oder die Nutzdauer ($NT_c$) eines OFDM-Symbols ist/ sind.

3. Verfahren zur Blindabschätzung wenigstens eines Modulationsparameters ($\theta$) eines OFDM-Signals, das eine Mehrzahl von OFDM-Symbo!en umfasst, wobei das OFDM-Signal während einer gegebenen Beobachtungsperiode ($T_0$) im Basisband abgetastet wird, um eine Mehrzahl $M$ von Abtastwerten zu erhalten, und man für eine Mehrzahl von Werten des Parameters eine Kostenfunktion ($\Omega$) berechnet, die abhängt von einem Abstand zwischen einem Vektor $y$, gebildet durch die Mehrzahl von Abtastwerten, und einem Vektor $\mathbf{H}_\theta \mathbf{H}_\theta^\dagger \mathbf{y}$, wobei $\mathbf{H}_\theta$ eine Matrix ist, die die Modulation der Unterträger des OFDM-Multiplex durch einen Block von Modulationssymbolen repräsentiert, wobei die Matrix von dem abzuschätzenden Parameter abhängt, und wobei $\mathbf{H}_\theta^\dagger$ die pseudo-inverse Matrix von $H_\theta$ ist, wobei die Abschätzung des Parameters als der Wert des Parameters ($\bar{\theta}$) erhalten wird, dem kleinsten Wert der Kostenfunktion auf der Mehrzahl von Werten des Parameters entspricht.

4. Verfahren zur Abschätzung nach Anspruch 3, **dadurch gekennzeichnet, dass** die pseudo-inverse Matrix von $\mathbf{H}_\theta^\dagger$ berechnet wird als $\dfrac{\mathbf{H}_\theta^{\mathrm{H}}}{q(1 + D/N)}$, wobei $\mathbf{H}_\theta^{\mathrm{H}}$ die konjugierte Transponierte der Matrix $\mathbf{H}_\theta$ ist, $q$ ein Testwert der Abtastrate des OFDM-Signals ist, und D und $N$ ein Testwert der Präfixlänge bzw. ein Testwert der Nutzdauer sind, ausgedrückt als Zahl von Chips ($T_c$).

5. Verfahren zur Blindabschätzung wenigstens eines Modulationsparameters $\theta$ eines OFDM-Signals, das eine Mehrzahl von OFDM-Symbolen umfasst, wobei das OFDM-Signal während einer gegebenen Beobachtungsperiode ($T_0$) im Basisband abgetastet wird, um eine Mehrzahl von Abtastwerten zu erhalten, und man für eine Mehrzahl von Werten des Parameters eine Kostenfunktion $\Omega$ berechnet, die eine abnehmende Funktion der bedingten Gaußschen Wahrscheinlichkeit ist $p_g(y|\theta)$ ist, wobei $y$ ein durch die Mehrzahl von Abtastwerten gebildeter Vektor ist, und wobei $p_g(\mathbf{y}|\theta)$ erhalten wird ausgehend von einer Gaußschen Verteilung der Modulationssymbole, die die verschiedenen Unterträger des OFDM-Multiplex für die Mehrzahl von OFDM-Symbolen modulieren, wobei die Abschätzung des Parameters als der Wert des Parameters ($\bar{\theta}$) erhalten wird, der dem kleinsten Wert der Kostenfunktion auf der Mehrzahl von Werten des Parameters entspricht.

6. Verfahren zur Abschätzung nach Anspruch 5, **dadurch gekennzeichnet, dass** die Kostenfunktion eine Funktion $-\log p_g(y|\theta)$ ist.

7. Verfahren zur Abschätzung nach Anspruch 6, **dadurch gekennzeichnet, dass** die Kostenfunktion berechnet wird mittels des Ausdrucks:

$$\Omega\big(-\mathrm{logpg}\big(\mathrm{y}|\theta\big)\big) =$$

$$\det\left(2\sigma_a^2\ \mathbf{H}_\theta^\mathbf{H}\mathbf{H}_\theta + 2N_0\mathbf{I_{KN}}\ \right) - \frac{\sigma_a^2}{2N_0}\,\mathbf{y}^\mathbf{H}\mathbf{H}_\theta\left(\sigma_a^2\ \mathbf{H}_\theta^\mathbf{H}\mathbf{H}_\theta + N_0\mathbf{I_{KN}}\ \right)^{-1}\mathbf{H}_\theta^\mathbf{H}\mathbf{y}$$

, wobei $H_\theta$ eine Matrix ist, die die Modulation der Unterträger des OFDM Multiplex durch die Modulationssymbole repräsentiert, wobei die Matrix von dem abzuschätzenden Parameter abhängt, wobei $\mathbf{H}_\theta^\mathbf{H}$ die konjugierte Transponierte der Matrix $\mathbf{H}_\theta$ ist, wobei $\mathbf{I_{KN}}$ die Identitätsmatrix ist, wobei $\sigma_a^2$ eine Abschätzung der Varianz der Modulationssymbole ist, wobei $N_0$ eine Abschätzung der Rauschdichte und det(.) die Determinante ist.

8. Verfahren zur Abschätzung nach Anspruch 6, **dadurch gekennzeichnet, dass** die Kostenfunktion erhalten wird ausgehend von dem Ausdruck:

$$\Omega\left(\ -\log p_g\ \big(\mathbf{y}|\boldsymbol\theta\big)\ \right) = KNlog\big(\mathrm{w}_a^2\big) - \frac{\sigma_a^2}{\mathrm{N}_0 w_a^2}\,\mathbf{y}^\mathbf{H}\mathbf{H}_\theta\mathbf{H}_\theta^\mathbf{H}\mathbf{y}$$

wobei $\mathrm{w}_a^2 = 2\sigma_a^2\ q\left(1+\dfrac{D}{N}\right) + 2N_0$ , wobei $\mathbf{H}_\theta$ eine Matrix ist, die die Modulation der Unterträger eines OFDM-Multiplex durch die Modulationssymbole repräsentiert, wobei die Matrix von dem abzuschätzenden Parameter abhängt, wobei $\mathbf{H}_\theta^\mathbf{H}$ die konjugierte Transponierte der Matrix $\mathbf{H}_\theta$ ist, wobei $\mathbf{I_{KN}}$ die Identitätsmatrix ist, wobei $\sigma_a^2$ eine Abschätzung der Varianz der Modulationssymbole ist, wobei $N_0$ die Rauschdichte ist, wobei $q$ ein Testwert der Abtastrate des OFDM-Signals ist, und wobei $D$ und $N$ ein Testwert der Präfixlänge bzw. ein Testwert der Nutzlänge sind, ausgedrückt als Anzahl von Chips ($T_c$).

$T_{prefix} = DT_c$

$T_{utile} = NT_c$

## Fig. 1

220

210

230

240

$D$

$T_c$ ↓

S/P

$N$

FFT

$N$

P/S

$\hat{a}_{k,n}$

## Fig. 2

**Fig. 3**

BB —— 310

$T_e \downarrow$ —— 320

$\Pi\left(T_0\right)$ —— 330

$\mathbf{y} = \left(y(0), y(1), ..., y(M-1)\right)^T$ —— 340

$init(\boldsymbol{\theta})$
$init\left(\Omega_{min}\right)$ —— 350

$calculate(\mathbf{H}_{\boldsymbol{\theta}})$
$calculate\left(\mathbf{H}_{\boldsymbol{\theta}}^{\dagger}\right)$ —— 360

$\eta = \Omega\left(\left\|\left(\mathbf{I_M} - \mathbf{H}_{\boldsymbol{\theta}}\mathbf{H}_{\boldsymbol{\theta}}^{\dagger}\right)\mathbf{y}\right\|\right)$ —— 365

$\eta < \Omega_{min}$ ? —— 370

Y → $\eta = \Omega_{min}$
$store(\boldsymbol{\theta})$ —— 375

N

385

$vary(\boldsymbol{\theta})$ ← N — $\boldsymbol{\theta} = end$ ? —— 380

Y

$retrieve(\hat{\boldsymbol{\theta}})$ —— 390

**Fig. 4**

BB — 410

$T_e \downarrow$ — 420

$\Pi \left( T_0 \right)$ — 430

$\mathbf{y} = \left( y(0), y(1), ..., y(M-1) \right)^T$ — 440

$init(\boldsymbol{\theta})$
$init\left( \Omega_{min} \right)$ — 450

$calculate(\mathbf{H_\theta})$
$calculate\left( \mathbf{H_0 H_\theta^H} \right)$ — 460

$$\eta = KN \log\left( \omega_a^2 \right) - \frac{\sigma_a^2}{N_0 \omega_a^2} \mathbf{y^H H_0 H_\theta^H y}$$ — 465

$\eta < \Omega_{min}$ ? — 470

Y → $\eta = \Omega_{min}$
$store(\boldsymbol{\theta})$ — 475

N

485 — $vary(\boldsymbol{\theta})$ ← N — $\boldsymbol{\theta} = end$ ? — 480

Y

$retrieve(\hat{\boldsymbol{\theta}})$ — 490

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. LIU et al.** A blind time-parameters estimation scheme for OFDM in multi-path channel. *Proc. 2005 Int'1 Conference on Information, Communications and Signal Processing,* 23 Septembre 2005, vol. 1, 242-247